(19) **Europäisches Patentamt**
**European Patent Office**
**Office européen des brevets**

(11) **EP 2 484 444 B1**

(12) **EUROPEAN PATENT SPECIFICATION**

(45) Date of publication and mention
of the grant of the patent:
**30.07.2014 Bulletin 2014/31**

(21) Application number: **10820520.4**

(22) Date of filing: **28.09.2010**

(51) Int Cl.:
*B01J 35/02* (2006.01)    *B01J 37/02* (2006.01)
*C09D 1/00* (2006.01)    *C09D 5/16* (2006.01)
*C09D 7/12* (2006.01)    *C09D 201/00* (2006.01)
*E04F 13/02* (2006.01)    *E04F 13/08* (2006.01)

(86) International application number:
**PCT/JP2010/066836**

(87) International publication number:
**WO 2011/040405 (07.04.2011 Gazette 2011/14)**

(54) **PHOTOCATALYST-COATED OBJECT AND PHOTOCATALYST COATING LIQUID THEREFOR**

MIT EINEM PHOTOKATALYSATOR BESCHICHTETES OBJEKT UND PHOTOKATALYTISCHE BESCHICHTUNGSFLÜSSIGKEIT DAFÜR

OBJET REVÊTU D'UN PHOTOCATALYSEUR ET LIQUIDE DE REVÊTEMENT À BASE DUDIT PHOTOCATALYSEUR

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.09.2009 JP 2009228147**

(43) Date of publication of application:
**08.08.2012 Bulletin 2012/32**

(73) Proprietor: **TOTO LTD.**
**Kitakyushu-shi**
**Fukuoka 802-8601 (JP)**

(72) Inventors:
• **HAYAKAWA Makoto**
**Kitakyushu-shi**
**Fukuoka 802-8601 (JP)**
• **KAMESHIMA Junji**
**Kitakyushu-shi**
**Fukuoka 802-8601 (JP)**
• **OMOSHIKI Koji**
**Kitakyushu-shi**
**Fukuoka 802-8601 (JP)**

• **KITAZAKI Satoru**
**Kitakyushu-shi**
**Fukuoka 802-8601 (JP)**
• **IKEDA Takeshi**
**Kitakyushu-shi**
**Fukuoka 802-8601 (JP)**
• **KANNO Mitsuyoshi**
**Kitakyushu-shi**
**Fukuoka 802-8601 (JP)**
• **SHIMAI Akira**
**Kitakyushu-shi**
**Fukuoka 802-8601 (JP)**

(74) Representative: **Grünecker, Kinkeldey, Stockmair & Schwanhäusser**
**Leopoldstrasse 4**
**80802 München (DE)**

(56) References cited:
WO-A1-97/00134    WO-A1-98/03607
WO-A1-2008/123278    WO-A1-2009/129760
WO-A1-2010/029596    JP-A- 11 169 727
JP-A- 2004 051 644    JP-A- 2008 272 718
US-A1- 2005 233 135    US-A1- 2005 266 981

**Description**

The present invention relates to a photocatalyst-coated body comprising a substrate and a photocatalyst layer, and to the use of a photocatalytic coating liquid for preparing said body.

In recent years, a photocatalyst such as titanium oxide has been used in many applications such as an exterior material of an architectural structure. By use of a photocatalyst, various kinds of harmful substances can be decomposed utilizing a photo-energy, or dirt attached onto the surface of a substrate can be easily washed out with water by hydrophilizing the surface thereof coated with a photocatalyst.

For example, a technique for obtaining a photocatalyst body by forming a coat film containing a photocatalytic titanium dioxide and a silica sol as a binder component onto a substrate is known (for example, JP H11(1999)-169727A). In this technique, it is reported that additive amount of the silica sol based on $SiO_2$ is 20 to 200 parts by weight relative to titanium dioxide.

In the formulation wherein such photocatalyst layer is formed on the surface of a substrate, if the substrate is an organic material, the material might be decomposed or deteriorated by a photocatalytic activity of the photocatalyst. To solve this problem, a technique of protecting the substrate as underlayment from deterioration due to the photocatalytic action by providing an adhesive layer such as a silicon-modified resin between the photocatalyst layer and the substrate is known (WO-A-97/00134). In this prior art, an example with more than 20% by weight of the photocatalyst is shown and it is claimed that decomposition or deterioration of the substrate was effectively prevented.

Further, a proposal is made to prevent decomposition or deterioration of the substrate by providing an intermediate layer containing a silicon-modified resin and an organic fungicide between the photocatalyst layer and the substrate (JP-B-4092434).

If the amount of the photocatalyst in the photocatalyst layer is small, the possibility of decomposition or deterioration of the substrate as described above becomes small; as a result, however, the action of the photocatalyst might become small, too. Accordingly, although the photocatalyst layer having the photocatalyst of 5% or less by weight is disclosed e.g. in WO-A-98/03607, JP-A-2004-51644A, it is difficult to confirm that these technologies provide an appropriate composition or structure to realize various properties, especially a decomposition property of harmful gases. For example, in WO-A-98/03607, the amount of silica particles present relative to the photocatalyst is extremely small. The teaching of JP-A-2004-51644A is different from the present invention with regard to the addition of a hydrophobic resin.

WO-A-2010/029596 discloses a coating composition comprising a perfluorosulfonic acid-type or a perfluorocarboxylic acid-type ion exchange resin, a fluororesin, a photocatalyst and bleeding prevention particles which is coated onto a surface of a silicone sealant layer.

WO-A-2009/129760 describes a particle surface coated with photocatalytic oxides or metal salts, such as titanium dioxide, to ensure an active positive influence on the reduction of pollutants.

US-A-2005/0233135 discloses a dew resistant coating comprising a first layer comprising fine elongate silica and second layer comprising a photocatalytic composition, useful for indoor applications.

US-A-2005/0266981 describes a liquid composition suitable for the preparation of a photocatalytical layer comprising a photocatalytic material and a hydrophilic binder which comprises an essentially completely hydrolyzed organosilicate.

The object of the present invention is to provide a photocatalyst-coated body having various excellent properties, especially excellent decomposition property of harmful gases and durability of a self-cleaning property based on the long term hydrophilicity of the photocatalyst, while effectively suppressing corrosion of a substrate, especially of an organic substrate, as well as various excellent intended coat properties such as weatherability, transparency, film strength.

Said object is solved by a photocatalyst-coated body comprising a substrate and a photocatalyst layer formed on the substrate,

the photocatalyst layer comprising:

photocatalyst particles in the range between more than 3% by mass and less than 5% by mass wherein the photocatalyst particles are titanium oxide particles,
inorganic oxide particles in the range between more than 85% by mass and less than 97% by mass wherein the inorganic oxide particles are silica particles, and
a binder in the range between 0% or more by mass and less than 10% by mass,
relative to 100% by mass of totality of the photocatalyst layer.

Furthermore, the present invention provides the use of a photocatalytic coating liquid for preparing said photocatalyst-coated body, the photocatalytic coating liquid containing:

a solvent,
photocatalyst particles in the range between more than 3% by mass and less than 5% by mass wherein the photocatalyst particles are titanium oxide particles,
inorganic oxide particles in the range between more than 85% by mass and less than 97% by mass wherein the inorganic oxide particles are silica particles, and
a binder in the range between 0% or more by mass and less than 10% by mass,
relative to 100% by mass of totality of dried substances in the photocatalytic coating liquid.

Preferably, the photocatalyst layer comprises the photocatalyst particles in the range between 3.1% or more by mass and 4.9% or less by mass and the inorganic oxide particles in the range between 85.1% or more by mass and 96.9% or less by mass, relative to 100% by mass of totality of the photocatalyst layer.

It is further preferred that the substrate contains a resin containing an organic substance on its surface and the photocatalyst layer is provided on the surface.

It is also preferred that a surface of the substrate comprises a resin containing an organic substance and the photocatalyst layer is provided on the surface.

It is also preferred that a layer containing the photocatalyst-anticorrosive resin is formed on the substrate.

It is further preferred that the contact angle of water to the surface of the photocatalyst layer is lower than 20 degrees after an outdoor exposure of 8 days under the condition of an occasional rain fall hitting thereon.

It is also preferred that the binder is at least one selected from the group consisting of a substance obtained by drying hydrolyzable silicone, an amorphous inorganic oxide, a resin binder, and an alkaline silicate.

It is also preferred that the photocatalyst particles have a number average particle diameter ranging from 10 nm or more to 100 nm or less calculated by measuring length of 100 particles randomly selected from particles located within a visible field magnified 200.000 times by a scanning electron microscope.

It is also preferred that the inorganic oxide particles have a number average particle diameter ranging from more than 5 nm to 100 nm or less calculated by measuring length of 100 particles randomly selected from particles located within a visible field magnified 200,000 times by a scanning electron microscope.

It is also preferred that the photocatalyst-coated body is used as an exterior material.

It is also preferred that the photocatalyst particles are contained in the range between 3.1% or more by mass and 4.9% or less by mass and the inorganic oxide particles are contained in the range between 85.1% or more by mass and 96.9% or less by mass, relative to 100% by mass of totality of dried substances in the photocatalytic coating liquid.

It is also preferred that the photocatalytic coating liquid being used by applying onto a substrate, wherein a surface of the substrate comprises a resin containing an organic substance.

It is also further preferred that the photocatalytic coating liquid being used by applying onto a substrate, wherein the resin containing the organic substance is a photocatalyst-anticorrosive resin.

It is also preferred that a layer containing the photocatalyst-anticorrosive resin is formed on the surface of the substrate.

It is also preferred that the photocatalytic coating liquid being used for forming a photocatalyst-coated body having a photocatalyst layer obtained by applying onto a substrate, wherein the contact angle of water to the surface of the photocatalyst layer is lower than 20 degrees after an outdoor exposure for 8 days under the condition of an occasional rain fall hitting thereon.

It is also preferred that the binder is at least one selected from the group consisting of hydrolyzable silicone, a precursor to the amorphous inorganic oxide, a resin binder and an alkaline silicate.

It is also preferred that the photocatalyst particles have a number average particle diameter ranging from 10 nm or more to 100 nm or less calculated by measuring length of 100 particles randomly selected from particles located within a visible field magnified 200,000 times by scanning electron microscope.

It is also preferred that the inorganic oxide particles have a number average particle diameter ranging from more than 5 nm to 100 nm or less calculated by measuring length of 100 particles randomly selected from particles located within a visible field magnified 200,000 times by a scanning electron microscope.

The photocatalyst layer according to the present invention contains considerably smaller amount of a photocatalyst as compared to the amount generally recognized necessary in the past relative to the amount of a photocatalyst-coated body as well as the amount of inorganic oxide particles. It is considered that, because of such small amount of the photocatalyst, direct contact between the photocatalyst and the substrate can be suppressed, thereby leading to effective suppression of decomposition or corrosion of the substrate. On the other hand, photocatalyst activities, especially the decomposition activity of harmful gases, are maintained or even improved in spite of small amount of the photocatalyst used, while realizing high weatherability. In addition, according to information obtained by the present inventors, deterioration of the photocatalyst-coated body was in no small way affected by a decomposition product formed from an organic material of the substrate by action of the photocatalyst or an ultraviolet light, for example, a monomer component formed by decomposition of a polymer. In particluar, if this component is hydrophobic, it exerts an adverse effect also on expression of hydrophilicity of the photocatalyst-coated body. According to the photoctalyst-coated body of the present invention, the effect of the component leaching out from the substrate can be suppressed so that the excellent hydrophilicity of the photocatalyst can be maintained for a long period of time. This can be regarded as an unexpected fact to those skilled in the art.

The reason for the unexpected effect of the action of the photocatalyst-coated body of the present invention is not clear, but it may be assumed as follows. However, the explanation hereunder is only an assumption.

The photocatalyst layer used in the present invention contains essentially two kinds of particles, titanium oxide particles and silica particles, so that there are abundant spaces among these particles. It is considered that, if a large amount of a hydrolyzable silicone that is widely used as a binder of a photocatalyst layer is used, the spaces among the particles are filled compactly thereby hindering gas diffusion. In the present invention, the photocatalyst layer does not contain a hydrolyzable silicone, or even if it does contain a hydrolyzable silicone, the amount thereof is small relative to the amount of the photocatalyst layer, the totality of which is taken as 100% by mass, so that the spaces among the particles can be adequately secured. It is considered that the spaces formed thereamong realize a structure with which harmful gases such as NOx and SOx can diffuse easily into the photocatalyst layer; as a result, the harmful gases can contact with the photocatalyst particles efficiently so that the gases can be decomposed by action of the photocatalyst. In addition, it is considered that the photocatalyst present in the photocatalyst layer efficiently decomposes a component leaching out from the substrate, so that the hydrophilicity of the photocatalyst can be maintained for a long period of the time.

In addition to the working effects as mentioned above, the photocatalyst-coated body of the present invention can also have excellent weatherability, while maintaining a function of harmful gas removal based on the excellent decomposition property of the photocatalyst, especially in tropical and subtropical regions in low latitudes, where the amount of ultraviolet light is abundant and weather conditions of high temperature and high humidity prevail.

In the present invention, it is preferable that the substrate contains a resin containing an organic substance on the surface thereof. Examples of a preferred substrate from the application point of view include a general exterior material including a construction material, an exterior material of a construction structure, a window frame, a window glass, a structure member material, an exterior material and a coating material of a vehicle, an outer material of a mechanical equipment and an article, a dust proofing cover and a coat material thereof, a traffic sign board, various display equipment, a commercial tower, a sound-seal traffic wall, a sound-seal railway wall, a bridge, armoring and coating of a guard rail, interior material and coating of a tunnel, an insulator, a solar cell cover, a heat collector cover of a solar water heater, an agricultural greenhouse, an illuminating light cover for vehicle, an outdoor lighting apparatus, a table; and a film, a sheet, and a seal with which the surface of the foregoing materials is adhered.

According to a preferred embodiment of the present invention, the substrate contains a resin containing an organic substance on its surface. The substrate may be composed of an organic material, and also the surface of the substrate composed of an inorganic material may be covered with an organic material (for example, a decorative board). In addition, an inorganic pigment, or an inorganic extender pigment, other than the resin containing an organic material, may be added. According to the photocatalsyt-coated body of the present invention, an adverse effect by a component possibly leaching out from the organic substrate on the self-cleaning property based on hydrophilicty can be suppressed; and thus, the excellent hydrophilicty of the photocatalyst can be maintained for a long period of time.

According to a preferred embodiment of the present invention the photocatalyst-anticorrosive resin, can be a silicone-type resin such as a silicone resin, a silicone-modified acryl resin, a silicone-modified epoxy resin, a silicone-modified urethane resin, and a silicone-modified polyester resin; or a fluorinated resin. The way how the photocatalyst-anticorrosive resin is present on the surface of the substrate includes the state that the totality of the substrate is composed of the photocatalyst-anticorrosive resin and the state that the surface of the substrate composed of other materials is covered with a layer containing the photocatalyst-anticorrosive resin, though not limited by them. With the surface of the substrate contains the photocatalyst-anticorrosive resin, the weatherability of the photocatalyst-coated body can be improved.

In the present invention, the photocatalyst layer includes, for example, a a partial film, in addition to a complete film, provided that the photocatalyst particles exist on the substrate surface. In addition, the photocatalyst layer may be present discretely on the substrate surface, like islands. According to a preferred embodiment of the present invention, this photocatalyst layer is obtained by applying a coating solution.

According to a preferred embodiment of the present invention, the photocatalyst layer has a film thickness in the range between 0.5 $\mu$m or more and 3 $\mu$m or less. More preferably the film thickness is in the range between 0.5 $\mu$m or more and 3.0 $\mu$m or less, or still more preferably in the range between 1.0 $\mu$m or more and 2.0 $\mu$m or less. In this range, an ultraviolet light penetrating to the interface between the photocatalyst layer and the substrate can be sufficiently attenuated, and thus, the weatherability can be improved. In addition, the photocatalyst particles, the content of which is smaller than that of the inorganic particles, can be increased in the direction of the film thickness, and thus, the decomposition property of harmful gases can be improved. Further in addition, excellent properties in transparency and film strength can be obtained.

As the photocatalyst anatase type titanium oxide particles are preferred. Titanium oxide has a high band-gap energy, thereby requiring an ultraviolet light for photoexcitation and not absorbing visible light during photoexcitation;

and thus, titanium oxide is advantageous in that coloring due to complementary color components does not take place. Titanium oxide is available in various forms such as a powder, a sol, and a solution; any form can be used as far as the form shows the photocatalytic activity.

The shape of the particles is preferably a true sphere, but a rough circle or an oval may be allowed; in the latter cases the length of the particles is roughly calculated by an equation of (long diameter+short diameter)/2.

The shape of the silica particles is preferably a true sphere, but a rough circle or an oval may be allowed; in the latter cases the length of the particles is roughly calculated by an equation of (long diameter+short diameter)/2.

The photocatalyst layer used in the present invention may contain at least one binder selected from the group consisting of a substance obtained by drying hydrolyzable silicone, an amorphous inorganic oxide, a resin binder, and an alkaline silicate, wherein these substances contribute, as the binder, to enhancement of the strength of the photocatalyst layer. However, there is a case that the presence of these binders exerts an influence on the formation of the spaces which are advantageous in the realization of the photocatalytic activity or in the decomposition of harmful gases. Accordingly, in the present invention, the foregoing binder may be allowed as an arbitrary component contained therein, provided that the amount thereof is such that the decomposition property of harmful gases is secured, while it is preferable that a binder is not added or the amount thereof is small. Depending on the circumstances, it is preferable that the binder is not contained therein at all. Specifically, the content of the binder is in the range between 0% or more by mass and less than 10.0% by mass, preferably 5.0% or less by mass, most preferably 0% by mass, relative to 100% by mass of totality of the photocatalyst layer.

The substance obtained by drying hydrolyzable silicone may be obtained by hydrolysis condensation of at least a part of at least one selected from the group consisting of, for example, a hydrolyzable silane containing at least one hydrolyzable silane unit with two to four functionalities, an organosilicone oligomer or a liquid organosilicone and a silicone emulsion obtained by hydrolysis condensation of at least a part of the foregoing hydrolyzable silane, to which an organosilicate oligomer or a liquid oraganosilicate has been added as an arbitrary component as needed.

As to the amorphous inorganic oxide, amorphous titanium oxide, amorphous silica, or amorphous alumina, not having a shape of particle, can be suitably used. The amorphous inorganic oxides may be obtained by hydrolysis condensation of, for example, a metal alkoxide, a metal chelate, a metal peroxide, a metal salt of an inorganic acid, a metal salt of an organic acid, or a metal halide.

As to the resin binder, binders having good weatherability, such as a fluorinated resin binder, a silicone-modified acryl binder, a silicone-modified epoxy binder, a silicone-modified urethane binder, and a silicone-modified polyester binder, are preferable, while there is a case that an acryl binder, or an epoxy binder can be used.

Furthermore, the resin binder can be a resin emulsion polymer such as polymers having good weatherability. A silicone emulsion polymer, a fluorinated resin emulsion polymer, an acryl silicone emulsion polymer, a silicone-modified emulsion polymer, a silicone-modified urethane emulsion polymer, and a silicone-modified polyester emulsion polymer are preferable, while there is a case that an acryl emulsion polymer can be used.

As to the alkaline silicate, for example, sodium silicate, potassium silicate, and lithium silicate can be suitably used.

Furthermore, by adding at least one kind of metal or metal compound selected from the group consisting of vanadium, iron, cobalt, nickel, palladium, zinc, ruthenium, rhodium, copper, silver, platinum, and gold to the photocatalyst layer used in the present invention, even higher antibacterial and fungicidal effects can be realized. However, it is desirable that the presence thereof does not exert an influence on the formation of spaces among the photocatalyst particles and the inorganic oxide particles; and thus, the added amount thereof may be small and the amount necessary to realize its effect is small. Specifically, the added amount is preferably in the range between 0.01 and 10% by mass, more preferably in the range between about 0.05 and about 5% by mass, relative to the photocatalyst. As to the metal compound, for example, gluconate, sulfate, malate, lactate, sulfate, nitrate, formate, acetate, and chelates of the foregoing metals can be suitably used.

Inorganic salt and resin particles that are hardly soluble or insoluble in water may be added to the photocatalyst layer used in the present invention. The added amount thereof may be in the range between 0% or more by mass and less than 10% by mass, preferably 5% or less, most preferably 0% by mass, relative to 100% by mass of the totality of the photocatalyst layer. However, it is desirable that the presence thereof does not exert an influence on the formation of spaces among the photocatalyst particles and the inorganic oxide particles.

As to the inorganic salt that is hardly soluble or insoluble in water, for example, aluminum hydroxide, boehmite, and calcium carbonate may be suitably used.

As to the resin particles, there is a case that gloss can be controlled by use of them in the form of a sphere or a plate from a view point of designing; and thus, the resin particles can be added in a range not to adversely affect the photocatalytic performance and weatherability.

An ultraviolet-shielding material, or an organic fungicide may be added to the photocatalyst layer. The added amount thereof may be in the range between 0% or more by mass and less than 10% by mass, preferably 5% or less, most preferably 0% by mass, relative to 100% by mass of the totality of the photocatalyst layer. However, it is desirable that the presence thereof does not exert an influence on the formation of spaces among the photocatalyst particles and the inorganic oxide particles.

In the present invention, it is preferable that the contact angle of water to the surface of the photocatalyst layer is lower than 20 degree after an outdoor exposure for 8 days under the condition of an occasional rain fall hitting on the surface of the photocatalyst layer provided on the photocatalyst-coated body. This makes possible to exert the self-cleaning property based on the excellent hydrophilicity of the photocatalyst stably for a long period of time even under weather conditions of abundant ultraviolet light and high temperature and high humidity in tropical and subtropical regions in low latitudes.

It is preferable that the porosity in the photocatalyst layer is in the range between 20% or more by volume and 35% or less by volume.

The porosity is obtained as an average value by measuring 5 points or more, preferably 10 points or more per one sample by using a film thickness tester based on a reflection spectroscopy (FE-3000, manufactured by Otsuka Electronics Co., Ltd.). The procedures for the porosity measurement of the photocatalyst layer having components of $TiO_2$ and $SiO_2$ on a glass plate substrate are shown below.

Procedure 1: Determination of the refractive index of a glass plate

1-1. The reflectance of a glass plate in the wavelength region between 230 and 800 nm is measured according to the following conditions:

| | |
|---|---|
| Measurement method: | absolute reflectance |
| Lens: | Refrec.25X |
| Standard reflective board: | Al-S-13 |
| Filter: | not used |
| Slit: | 0.2 mm $\times$ 2 mm |
| Sampling time: | 1000 millisecond |
| Accumulation number: | 9 times |
| Gain: | normal |

1-2. The reflectance of a glass plate in the wavelength region between 230 and 800 nm, with the composition media of air, a glass plate, and incident angle $\phi=0°$, is calculated by using the Fresnel amplitude reflectance coefficient at the interface between air and the glass plate upon reflection of an incident light from the air side on the glass plate and the n-Cauchy's dispersion formula [$n_m=C_{m1}+C_{m2}/\lambda^2+C_{m3}/\lambda^4$ (wherein $n_m$ is refractive index of the glass plate, $\lambda$ is wavelength, and $C_{m1}$, $C_{m2}$, and $C_{m3}$ are constants]. Meanwhile, in the n-Cauchy dispersion formula, the initial values of the constants ($C_{m1}$, $C_{m2}$, and $C_{m3}$) are made to $C_{m1}=1.5$, $C_{m2}=0$, and $C_{m3}=0$, the refractive index of air is made 1, and the extinction coefficient of air is made to 0 ("Basic Principle of Optical Thin Film" by Mitsunobu Kobiyama, pp 1 to 70, 2003, The Optronics Co., Ltd.).

1-3. By comparing the measured reflectance (1-1) and the calculated reflectance (1-2), $C_{m1}$, $C_{m2}$, and $C_{m3}$ at the minimum error sum of squares are obtained. In se-doing so, the upper limit of the error sum of squares is made to 0.02.

1-4. $C_{m1}$, $C_{m2}$, and $C_{m3}$ obtained in 1-3 are assigned to the n-Cauchy's dispersion formula to determine the reflectance of the glass plate $n_m$.

Procedure 2: Determination of the porosity of the photocatalyst layer

2-1. Reflectance of the photocatalyst layer in the wavelength region between 230 and 800 nm is measured according to the following conditions:

| | |
|---|---|
| Measurement method: | absolute reflectance |
| Lens: | Refrec.25X |
| Standard reflective board: | Al-S-13 |
| Filter: | not used |
| Slit: | 0.2 mm $\times$ 2 mm |
| Sampling time: | 1000 millisecond |
| Accumulation number: | 9 times |

(continued)

Gain:                          normal

2-2. The reflectance of the photocatalyst layer in the wavelength region between 230 and 800 nm, with the composition media of air, the photocatalyst layer of a single thin film, a glass plate, and an incident angle $\phi=0°$, is calculated by using the Fresnel amplitude reflectance coefficient at the interface between air and the single thin film upon summing up the reflected light of the incident light from the air side on the single thin film and the multiply reflected light of the light passed into the single thin film on the upper and lower surfaces (interface between air and the single thin film and interface between the single thin film and the glass plate) of the single thin film and the Bruggeman's approximation formula $[C_1\{(\varepsilon_1-\varepsilon)/(\varepsilon+2\varepsilon)\}+C_2\{(\varepsilon_2-\varepsilon)/(\varepsilon_2+2\varepsilon)\}+C_3\{(\varepsilon_3-2\varepsilon)/(\varepsilon_3+2\varepsilon)\}]=0$, $C_1+C_2+C_3=1$ (wherein $\varepsilon$ is a dielectric constant of the single thin film, $\varepsilon_1$ is the dielectric constant of $SiO_2$, $\varepsilon_2$ is a the dielectric constant of $TiO_2$, $\varepsilon_3$ is the dielectric constant of air, $C_1$ is the volume fraction of $SiO_2$, $C_2$ is the volume fraction of $TiO_2$, and $C_3$ is the volume fraction of air)] ("Basic Principle of Optical Thin Film" by Mitsunobu Kobiyama, pp 1 to 70, 2003, The Optronics Co.,Ltd. and D. E. Aspnes, Thin Solid Films, 89, 249 (1982)). Meanwhile, the initial values of $C_1$ (volume fraction of $SiO_2$), $C_2$ (volume fraction of $TiO_2$), and $C_3$ (volume fraction of air) are set so that the respective error sum of squares may converge to the minimum values. Here, the reflectance of air is made to 1 and the extinction coefficient of air is made to 0. The respective reflectance ($n_1$ and $n_2$) and the extinction coefficient ($k_1$ and $k_2$) of $SiO_2$ and $TiO_2$ are cited from "Handbook of Optical Constants of Solids" by E. D. Palik, 1998, Academic Press, San Diego.

2-3. $C_1$, $C_2$, and $C_3$ at the minimum error sum of squares are obtained by comparing the measured reflectance (2-1) and the calculated reflectance (2-2) with changing film thickness d and volume fractions $C_1$, $C_2$, and $C_3$ of $SiO_2$, $TiO_2$, and air. $C_3$ at the time when the error sum of squares becomes less than 0.02 and the minimum is adopted as the porosity. The other conditions are as follows:

| | |
|---|---|
| Search method of film thickness: | optimization method |
| Range of search (wavelength): | 400 to 800 nm |
| Range of search (film thickness): | 0 to 2000 nm |
| Step of film thickness: | 10 nm |

$C_3$ obtained here is taken as the porosity (volume %) of the photocatalyst layer used in the present invention.

The photocatalytic coating liquid use in the present invention is produced by dissolving or dispersing each component described in the photocatalyst layer with the foregoing mass ratio into a solvent. Here, titanium oxide may be in any form such as a powder, a sol, and a solution. Silica particles are preferably in the form of an aqueous colloid in water as a dispersing medium, or in the form of an organosol wherein the inorganic oxide particles are dispersed as the colloidal form into a hydrophilic solvent such as ethyl alcohol, isopropyl alcohol, and ethylene glycol, though colloidal silica is particularly preferable.

An ultraviolet-shielding material, an organic fungicide, a surfactant, an anti-foaming material, a pH-controlling material, a pigment, or a thickener may be added to the photocatalytic coating liquid. The added amount thereof may be in the range between 0% or more by mass and less than 10% by mass, preferably 5% or less, most preferably 0% by mass, I relative to 100% by mass of dried substances in the photocatalytic coating liquid. However, it is desirable that the presence thereof does not exert an influence on the formation of spaces among the photocatalyst particles and the inorganic oxide particles.

The photocatalytic coating liquid used in the present invention may contain a surfactant as an arbitrary component. The added amount thereof may be in the range between 0% or more by mass and less than 10% by mass, preferably in the range between 0% or more by mass and 8% or less by mass, still more preferably in the range between 0% or more by mass and 6% or less by mass, relative to 100% by mass of dry substances in the photocatalytic coating liquid. The addition of the surfactant makes it possible to smoothen and homogenize the coated surface, namely leveling can be effected by the addition. The surfactant is an effective component to improve the wetting properties of the photocatalytic coating liquid; but, if there is no concern as to the wetting properties, there is a case that it is preferable that the surfactant is not contained therein substantially or absolutely.

The surfactant may be arbitrarily selected in view of the dispersion stability of the photocatalyst and the inorganic oxide particles and wetting properties applied onto the intermediate layer, while a non-ionic surfactant is preferable; more preferable examples thereof include an ether type non-ionic surfactant, an ester type non-ionic surfactant, a polyalkylene glycol type non-ionic surfactant, a fluorine-based non-ionic surfactant, and a silicon-based non-ionic surfactant.

As to the solvent, any solvent that can properly disperse or dissolve the foregoing components can be used; any one of water and an organic solvent or both may be used. Among the solvents usable in the photocatalytic coating liquid , water is preferable because its influence on the environment is small. In addition, to improve the leveling property at the time of film formation and to control the drying properties, an organic solvent may be used. Preferable examples of the organic solvent include generally used solvents such as an alcohol; an ether; a ketone such as acetone, 2-butanone, methyl propyl ketone, methyl butyl ketone, and dipropyl ketone; an ester such as ethyl acetate, propyl acetate, isopropyl acetate, butyl acetate, amyl acetate, and ethyl butyrate; an aliphatic, an aromatic, and an alicyclic hydrocarbon such as benzene, toluene, xylene, chloroform, pentane, hexane, and cyclohexane; and a petroleum. These solvents may be used singly or as a mixture of them, while a water-soluble solvent is especially preferable. Examples of the water-soluble solvent include an alcohol, an ether, and a ketone; such as methanol, ethanol, modified ethanol, n-propanol, isopropanol, n-butanol, isobutanol, s-butanol, t-butanol, 1,3-butanediol, 2,3-butanediol, 1,4-butanediol, ethylene glycol, diethylene glycol, propylene glycol, dipropylene glycol, diethylene glycol monomethyl ether, diethylene glycol monoethyl ether, diethylene glycol monoisopropyl ether, diethylene glycol monobutyl ether, dipropylene glycol monomethyl ether, dipropylene glycol monoethyl ether, dipropylene glycol monoisopropyl ether, dipropylene glycol monobutyl ether, ethylene glycol dibutyl ether, diethylene glycol diethyl ether, diethylene glycol diisopropyl ether, triethylene glycol dimethyl ether, glycerine monomethyl ether, trimethylene glycol, N-methyl pyrrolidone, ethylene glycol monomethyl ether, propylene glycol monomethyl ether, propylene glycol monoethyl ether, propylene glycol monopropyl ether, 3,5-dimethyl-1-hexyne-3-ol, diacetone alcohol, and 3-methyl-3-methoxybutanol, wherein these solvents may be used singly or as a mixture of a plurality of them.

The concentration of solid components in the photocatalytic coating liquid used in the present invention is not particularly limited, while a range between 1 and 10% by mass is preferable in view of easy application. Meanwhile, the components in the photocatalyst coating composition are analyzed as follows; the photocatalytic coating liquid is separated into a particle component and a filtrate by ultrafiltration, and then each of which is analyzed with an infrared spectroscopy, a gel permeation chromatography, or a fluorescent X-ray spectroscopy; and the evaluation can be made by analyzing the obtained spectra.

The photocatalyst-coated body of the present invention can be produced by applying the photocatalytic coating liquid used in the present invention onto the substrate. Application methods generally used, such as a brush coating, a roller coating, a spray coating, a roll coater, a flow coater, a dip coating, a flow coating, and a screen printing, can be used. After application of the coating solution on the substrate, drying may be done at normal temperature or by heating if necessary. However, if heating is made until sintering takes place, the space among the particles might become smaller thereby leading to insufficient photocatalytic activity; and thus, it is preferable to choose the temperature and time such that the formation of spaces may not be influenced or may be influenced to a small degree. For example, the drying temperature is between 10°C or higher and 500°C or lower; and in the case that a resin is included at least in a part of the substrate, the drying temperature is preferably, for example, between 10°C or higher and 200°C or lower by considering a the heat resistance temperature of the resin.

As can be seen from the above, the photocatalyst-coated body of the present invention does not require interposing an intermediate layer between the photocatalytic body and the substrate. Therefore the time and cost in production thereof can be reduced; and thus it is advantageous.

[Examples]

The present invention will be explained specifically by the following examples.

[Example 1]

As the substrate, a plain plate of a colored organic coated body (50 mm × 100 mm) was provided. This colored organic coated body was obtained by applying a general silicone-modified acryl coating material containing carbon black powders (1% by mass of silicon atom was contained in the silicone-modified acryl coating resin) onto a ceramic siding substrate treated with a sealer, followed by sufficient drying and curing the product thus obtained.

Then, the photocatalytic coating liquid was provided. This photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give a mass ratio of the solid $TiO_2$ to the solid $SiO_2$ of 3.10:96.90 with the solid concentration therein being controlled at 5.5% by mass by using water as the solvent.

The photocatalytic coating liquid thus obtained was applied, by a spray coating method with a coating amount of 20 g/m$^2$, onto the preheated colored organic coated body mentioned above, which was then dried at normal temperature to form a photocatalyst layer, thereby obtaining the photocatalyst-coated body.

[Example 2]

A sample was prepared under conditions similar to those of Example 1 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give a mass ratio of the solid $TiO_2$ to the solid $SiO_2$ of 4.60:95.40 with the solid concentration therein being controlled at 5.5% by mass by using water as the solvent and that the coating amount of the photocatalytic coating liquid onto the colored organic coated body was changed to 30 $g/m^2$.

Meanwhile, to measure the porosity, a sample of the coated body was obtained by a manner similar to the foregoing except that a glass plate was used as the substrate and drying after application of the liquid was done at 90°C. The porosity was 28% by volume.

[Example 3]

A sample was prepared under conditions similar to those of Example 2 except that the photocatalytic coating liquid was prepared by mixing an aqueous dispersion of an anatase type titania (acidic, an average particle diameter of 10 nm), a water-dispersible colloidal silica (acidic, alumina-coated, an average particle diameter of 14 nm), and a polycondensation product of tetraethoxy silane (in ethanol-water solvent, $SiO_2$-equivalent concentration of 40% by mass) so as to give a mass ratio of the solid $TiO_2$, the solid component in the colloidal silica, and the dried $SiO_2$-equivalent mass in the polycondensation product of tetraethoxy silane of 4.60:90.40:5.00 with the solid concentration therein being controlled at 5.5% by mass by using ethanol and water as solvents.

Meanwhile, to measure the porosity, a sample of the coated body was obtained by a manner similar to the foregoing except that a glass plate was used as the substrate and drying after application of the liquid was done at 90°C. The porosity was 21% by volume.

[Example 4]

A sample was prepared under conditions similar to those of Example 3 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give a mass ratio of the solid $TiO_2$ to the solid $SiO_2$ of 4.90:95.10 and the solid concentration therein being controlled at 5.5% by mass by using water as the solvent.

[Example 5]

As the substrate, a plain plate of a colored organic coated body (50 mm × 100 mm) was provided. This colored organic coated body was obtained by applying an acryl coating material containing a white pigment (not containing silicon) onto a ceramic siding substrate treated with a sealer until the underlayment thereof was completely covered, followed by sufficient drying and curing the product thus obtained at normal temperature.

Then, the photocatalytic coating liquid was provided. This photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give a mass ratio of the solid $TiO_2$ to the solid $SiO_2$ of 3.10:96.90 with the solid concentration therein being controlled at 5.5% by mass by using water as the solvent.

The photocatalytic coating liquid thus obtained was applied, by a spray coating method with a coating amount of 20 $g/m^2$, onto the preheated colored organic coated body mentioned above, which was then dried at normal temperature to form a photocatalyst layer, thereby obtaining the photocatalyst-coated body.

[Example 6]

A sample was prepared under conditions similar to those of Example 5 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give a mass ratio of the solid $TiO_2$ to the solid $SiO_2$ of 4.60:95.40 with the solid concentration therein being controlled at 5.5% by mass by using water as the solvent and that the coating amount of the photocatalytic coating liquid onto the colored organic coated body was changed to 30 $g/m^2$.

[Example 7]

A sample was prepared under conditions similar to those of Example 6 except that the photocatalytic coating liquid was prepared by mixing an aqueous dispersion of an anatase type titania (acidic, an average particle diameter of 10 nm), a water-dispersible colloidal silica (acidic, alumina-coated, an average particle diameter of 14 nm), and a polycondensation product of tetraethoxy silane (in ethanol-water solvent, $SiO_2$-equivalent concentration of 40% by mass) so as to give a mass ratio of the solid $TiO_2$, the solid component in the colloidal silica, and the dried $SiO_2$-equivalent mass in the polycondensation product of tetraethoxy silane of 4.60:90.40:5.00 with the solid concentration therein being controlled at 5.5% by mass by using ethanol and water as the solvents.

[Example 8]

A sample was prepared under conditions similar to those of Example 6 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give a mass ratio of the solid $TiO_2$ to the solid $SiO_2$ of 4.90:95.10 and the solid concentration therein being controlled at 5.5% by mass by using water as the solvent.

[Comparative Example 1]

A sample was prepared under conditions similar to those of Example 2 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give a mass ratio of the solid $TiO_2$ to the solid $SiO_2$ of 0.60:99.40 with the solid concentration therein being controlled at 5.5% by mass by using water as the solvent.
Meanwhile, to measure the porosity, a sample of the coated body was obtained by a manner similar to the foregoing except that a glass plate was used as the substrate and drying after application of the liquid was done at 90°C. The porosity was 15% by volume.

[Comparative Example 2]

A sample was prepared under conditions similar to those of Example 1 except that the photocatalytic coating liquid was prepared by mixing an aqueous dispersion of an anatase type titania (acidic, an average particle diameter of 10 nm) and a water-dispersible colloidal silica (acidic, alumina-coated, an average particle diameter of 14 nm) so as to give a mass ratio of the solid $TiO_2$ to the solid $SiO_2$ of 2.00:98.00 with the solid concentration therein being controlled at 5.5% by mass by using water as the solvent and that the coating amount of the photocatalytic coating liquid onto the colored organic coated body was changed to 15 g/m$^2$.

[Comparative Example 3]

A sample was prepared under conditions similar to those of Comparative Example 2 except that the photocatalytic coating liquid was prepared by mixing an aqueous dispersion of an anatase type titania (acidic, an average particle diameter of 10 nm) and a water-dispersible colloidal silica (acidic, alumina-coated, an average particle diameter of 14 nm) so as to give a mass ratio of the solid $TiO_2$ to the solid $SiO_2$ of 10.00:90.00 with the solid concentration therein being controlled at 5.5% by mass by using water as the solvent.
Meanwhile, to measure the porosity, a sample of the coated body was obtained by a manner similar to the foregoing except that a glass plate was used as the substrate and drying after application of the liquid was done at 90°C. The porosity was 37% by volume.

[Comparative Example 4]

A sample was prepared under conditions similar to those of Example 6 except that the photocatalytic coating liquid was prepared by mixing an aqueous dispersion of an anatase type titania (basic, an average particle diameter of 42 nm) and a water-dispersible colloidal silica (basic, an average particle diameter of 14 nm) so as to give a mass ratio of the solid $TiO_2$ to the solid $SiO_2$ of 0.60:99.40 with the solid concentration therein being controlled at 5.5% by mass by using water as the solvent.

[Comparative Example 5]

A sample was prepared under conditions similar to those of Example 5 except that the photocatalytic coating liquid was prepared by mixing an aqueous dispersion of an anatase type titania (acidic, an average particle diameter of 10 nm) and a water-dispersible colloidal silica (acidic, alumina-coated, an average particle diameter of 14 nm) so as to give a mass ratio of the solid $TiO_2$ to the solid component in the colloidal silica of 2.00:98.00 with the solid concentration therein being controlled at 5.5% by mass by using water as the solvent and that the coating amount of the photocatalytic coating liquid onto the colored organic coated body was changed to 15 g/m$^2$.

[Evaluation Experiment A]

Decomposition test of NOx for Examples 1 to 8 and Comparative Examples 1 to 5 was carried out as follows. Firstly, as a pretreatment, the foregoing samples were exposed to a BLB light with 1 mW/cm$^2$ (the light having an emission line spectrum at a wavelength of 351 nm was used) for 5 hours or more. Then, two of the coated samples were set in a reactor described in JIS R 1701-1. The light-shielded reactor was fed with an air adjusted at 25°C and 50% RH and mixed with about 1000 ppb of an NO gas at a rate of 1.5 l/min for 20 minutes. Thereafter, the BLB light adjusted at 1 mW/cm$^2$ (the light having an emission line spectrum at a wavelength of 351 nm was used) was irradiated for 20 minutes while keeping introduction of the gas. Thereafter, the reactor was shielded from light again while introduction of the gas was continued. The amount of the removed NOx was calculated according to the following equation by using the concentrations of NO and NO$_2$ before and after irradiation of the BLB light.

$$\text{The amount of removed NOx (ppb)} = [\text{NO(after irradiation)} - \text{NO(during irradiation)}] - [\text{NO}_2\text{(during irradiation)} - \text{NO}_2\text{(after irradiation)}]$$

The results of Examples 1 to 4 and Comparative Examples 1 to 3 are shown in Table 1, and the results of Examples 5 to 8 and Comparative Examples 4 to 6 are shown in Table 2. Here, the reference character G indicates that the amount of NOx removed was 100 ppb or more, while the reference character NG indicates less than 100 ppb.

[Evaluation Experiments B]

An outdoor exposure test was carried out on Miyakojima Island by placing the samples obtained by each of Examples 1 to 4 and Comparative Example 3 on the exposure table facing to the south with an inclination angle of 20 degrees from a horizontal line as specified in JIS K 5600-7-6. The appearance thereof was visually confirmed after 12 months.
The obtained results are shown in Table 1. In the table, the reference character G indicates that almost no change occurred, while the reference character NG indicates that efflorescence was formed slightly.

[Evaluation Experiments C]

The evaluation of a suppression effect on the hydrophilicity-inhibition property caused by bleeding-out from the substrate was made for the samples of Examples 5 to 8 and Comparative Examples 4 and 5 as as follows. The evaluation was made by placing the samples on the exposure table facing to the south with an inclination angle of 45 degrees from a horizontal line for 8 days after each sample was allowed to stand in a dark place for one day. Meanwhile, the outdoor exposure test was done in Chigasaki City in Kanagawa Prefecture. There was one rainy day during the exposure test. After 8 days of exposure, a contact angle between water and the surface of the sample was measured by using a contact angle meter (CA-X150 type, manufactured by Kyowa Interface Science Co., Ltd.).
The results are shown in Table 2. Here, the reference character G indicates that the contact angle with water was less than 20 degrees, while the reference character NG indicates 20 degrees or more.

[Table 1]

|  | Examples | | | | Comparative Examples | | |
|---|---|---|---|---|---|---|---|
|  | 1 | 2 | 3 | 4 | 1 | 2 | 3 |
| Amount of TiO$_2$ | 3.10 | 4.60 | 4.60 | 4.90 | 0.60 | 2.00 | 10.00 |
| Amount of SiO$_2$ | 96.90 | 95.40 | 90.40 | 95.10 | 99.40 | 98.00 | 90.00 |
| Amount of polymer | 0 | 0 | 5.00 | 0 | 0 | 0 | 0 |
| Amount of coating | 20 | 30 | 30 | 30 | 30 | 15 | 15 |
| Amount of solid component | 5.5 | 5.5 | 5.5 | 5.5 | 5.5 | 5.5 | 5.5 |

(continued)

|  | Examples | | | | Comparative Examples | | |
|---|---|---|---|---|---|---|---|
|  | 1 | 2 | 3 | 4 | 1 | 2 | 3 |
| ∆NOx | 126 | 263 | 110 | 254 | 39 | 102 | 129 |
|  | G | G | G | G | NG | G | NG |
| Appearance after 12 months | G | G | G | G |  |  | NG |

[Table 2]

|  | Examples | | | | Comparative Examples | |
|---|---|---|---|---|---|---|
|  | 5 | 6 | 7 | 8 | 4 | 5 |
| Amount of TiO$_2$ | 3.10 | 4.60 | 4.60 | 4.90 | 0.60 | 2.00 |
| Amount of SiO$_2$ | 96.90 | 95.40 | 90.40 | 95.10 | 99.40 | 98.00 |
| Amount of polymer | 0 | 0 | 5.00 | 0 | 0 | 0 |
| Amount of coating | 20 | 30 | 30 | 30 | 30 | 15 |
| Amount of solid component | 5.5 | 5.5 | 5.5 | 5.5 | 5.5 | 5.5 |
| ∆NOx | 127 | 264 | 112 | 256 | 38 | 103 |
|  | G | G | G | G | NG | G |
| Suppression of bleeding-out | 8° | 5° | 4° | 7° | 56° | 62° |
|  | G | G | G | G | NG | NG |

**Claims**

1.  A photocatalyst-coated body comprising a substrate and a photocatalyst layer formed on the substrate, the photocatalyst layer comprising:

    photocatalyst particles in the range between more than 3% by mass and less than 5% by mass wherein the photocatalyst particles are titanium oxide particles,
    inorganic oxide particles in the range between more than 85% by mass and less than 97% by mass wherein the inorganic oxide particles are silica particles, and
    a binder in the range between 0% or more by mass and less than 10% by mass,
    relative to 100% by mass of totality of the photocatalyst layer.

2.  The photocatalyst-coated body according to claim 1, wherein the photocatalyst layer comprises the photocatalyst particles in the range between 3.1 % or more by mass and 4.9% or less by mass and the inorganic oxide particles in the range between 85.1% or more by mass and 96.9% or less by mass, relative to 100% by mass of totality of the photocatalyst layer.

3.  The photocatalyst-coated body according to claim 1 or 2, wherein the substrate contains a resin containing an organic substance on its surface and the photocatalyst layer is provided on the surface.

4.  The photocatalyst-coated body according to claim 3, wherein a surface of the substrate comprises a resin containing an organic substance and the photocatalyst layer is provided on the surface.

5.  The photocatalyst-coated body according to claim 4, wherein a layer containing the photocatalyst-anticorrosive resin is formed on the substrate.

6.  The photocatalyst-coated body according to any one of claims 1 to 5, wherein the contact angle of water to the surface of the photocatalyst layer is lower than 20 degrees after an outdoor exposure for 8 days under the condition of an occasional rain fall hitting thereon.

7. The photocatalyst-coated body according to any one of claims 1 to 6, wherein the binder is at least one selected from the group consisting of a substance obtained by drying hydrolyzable silicone, an amorphous inorganic oxide, a resin binder, and an alkaline silicate.

8. The photocatalyst-coated body according to any one of claims 1 to 7, wherein the photocatalyst particles have a number average particle diameter ranging from 10 nm or more to 100 nm or less calculated by measuring length of 100 particles randomly selected from particles located within a visible field magnified 200,000 times by a scanning electron microscope.

9. The photocatalyst-coated body according to any one of claims 1 to 8, wherein the inorganic oxide particles have a number average particle diameter ranging from more than 5 nm to 100 nm or less calculated by measuring length of 100 particles randomly selected from particles located within a visible field magnified 200,000 times by a scanning electron microscope.

10. The photocatalyst-coated body according to any one of claims 1 to 9, wherein the photocatalyst-coated body is used as an exterior material.

11. Use of a photocatalytic coating liquid for preparing the photocatalyst-coated body according to any one of claims 1 to 10, the photocatalytic coating liquid containing:

   a solvent,
   photocatalyst particles in the range between more than 3% by mass and less than 5% by mass wherein the photocatalyst particles are titanium oxide particles,
   inorganic oxide particles in the range between more than 85% by mass and less than 97% by mass wherein the inorganic oxide particles are silica particles, and
   a binder in the range between 0% or more by mass and less than 10% by mass,
   relative to 100% by mass of totality of dried substances in the photocatalytic coating liquid.

12. The use according to claim 11, wherein the photocatalyst particles are contained in the range between 3.1% or more by mass and 4.9% or less by mass and the inorganic oxide particles are contained in the range between 85.1% or more by mass and 96.9% or less by mass, relative to 100% by mass of totality of dried substances in the photocatalytic coating liquid.

13. The use according to claim 11 or 12, the photocatalytic coating liquid being used by applying onto a substrate, wherein a surface of the substrate comprises a resin containing an organic substance.

14. The use according to claim 13, the photocatalytic coating liquid being used by applying onto a substrate, wherein the resin containing the organic substance is a photocatalyst-anticorrosive resin.

15. The use according to claim 14, wherein a layer containing the photocatalyst-anticorrosive resin is formed on the surface of the substrate.

16. The use according to any one of claims 11 to 15, the photocatalytic coating liquid being used for forming a photocatalyst-coated body having a photocatalyst layer obtained by applying onto a substrate, wherein the contact angle of water to the surface of the photocatalyst layer is lower than 20 degrees after an outdoor exposure for 8 days under the condition of an occasional rain fall hitting thereon.

17. The use according to any one of claims 11 to 16, wherein the binder is at least one selected from the group consisting of a hydrolyzable silicone, a precursor to the amorphous inorganic oxide, a resin binder, and an alkaline silicate.

18. The use according to any one of claims 11 to 17, wherein the photocatalyst particles have a number average particle diameter ranging from 10 nm or more to 100 nm or less calculated by measuring length of 100 particles randomly selected from particles located within a visible field magnified 200,000 times by a scanning electron microscope.

19. The use according to any one of claims 11 to 18, wherein the inorganic oxide particles have a number average particle diameter ranging from more than 5 nm to 100 nm or less calculated by measuring length of 100 particles randomly selected from particles located within a visible field magnified 200,000 times by a scanning electron microscope.

**Patentansprüche**

1. Mit einem Fotokatalysator beschichteter Körper umfassend ein Substrat und eine auf dem Substrat gebildete Fotokatalysatorschicht,
   wobei die Fotokatalysatorschicht umfasst:

   Fotokatalysatorteilchen in dem Bereich zwischen mehr als 3 Massenprozent und weniger als 5 Massenprozent, wobei die Fotokatalysatorteilchen Titanoxidteilchen sind,
   anorganische Oxidteilchen in dem Bereich zwischen mehr als 85 Massenprozent und weniger als 97 Massenprozent, wobei die anorganischen Oxidteilchen Siliciumdioxidteilchen sind, und
   ein Bindemittel in dem Bereich zwischen 0 Massenprozent oder mehr und weniger als 10 Massenprozent, bezogen auf 100 Massenprozent der Gesamtheit der Fotokatalysatorschicht.

2. Mit einem Fotokatalysator beschichteter Körper nach Anspruch 1, wobei die Fotokatalysatorschicht die Fotokatalysatorteilchen in dem Bereich zwischen 3,1 Massenprozent oder mehr und 4,9 Massenprozent oder weniger und die anorganischen Oxidteilchen in dem Bereich zwischen 85,1 Massenprozent oder mehr und 96,9 Massenprozent oder weniger, bezogen auf 100 Massenprozent der Gesamtheit der Fotokatalysatorschicht, umfasst.

3. Mit einem Fotokatalysator beschichteter Körper nach Anspruch 1 oder 2, wobei das Substrat ein Harz, das eine organische Substanz enthält, auf seiner Oberfläche enthält, und die Fotokatalysatorschicht auf der Oberfläche bereitgestellt ist.

4. Mit einem Fotokatalysator beschichteter Körper nach Anspruch 3, wobei eine Oberfläche des Substrats ein Harz umfasst, das eine organische Substanz enthält, und die Fotokatalysatorschicht auf der Oberfläche bereitgestellt ist.

5. Mit einem Fotokatalysator beschichteter Körper nach Anspruch 4, wobei eine Schicht, die das gegenüber dem Fotokatalysator korrosionsresistente Harz (photocatalyst-anticorrosive resin) enthält, auf dem Substrat gebildet ist.

6. Mit einem Fotokatalysator beschichteter Körper nach einem der Ansprüche 1 bis 5, wobei der Kontaktwinkel von Wasser zu der Oberfläche der Fotokatalysatorschicht nach einer Exponierung im Freien während 8 Tagen unter der Bedingung, dass gelegentlicher Regen darauf fällt, geringer als 20° ist.

7. Mit einem Fotokatalysator beschichteter Körper nach einem der Ansprüche 1 bis 6, wobei das Bindemittel wenigstens eines ist, ausgewählt aus der Gruppe bestehend aus einer Substanz, die erhalten wird durch Trocknen von hydrolysierbarem Silicon, einem amorphen anorganischen Oxid, einem Harzbindemittel und einem Alkalisilikat.

8. Mit einem Fotokatalysator beschichteter Körper nach einem der Ansprüche 1 bis 7, wobei die Fotokatalysatorteilchen einen zahlengemittelten Teilchendurchmesser im Bereich von 10 nm oder mehr bis 100 nm oder weniger aufweisen, berechnet durch Messen der Länge von 100 Teilchen, die zufällig ausgewählt sind aus Teilchen, die sich innerhalb eines sichtbaren Feldes befinden, das durch ein Rasterelektronenmikroskop 200000-fach vergrößert ist.

9. Mit einem Fotokatalysator beschichteter Körper nach einem der Ansprüche 1 bis 8, wobei die anorganischen Oxidteilchen einen zahlengemittelten Teilchendurchmesser im Bereich von mehr als 5 nm bis 100 nm oder weniger aufweisen, berechnet durch Messen der Länge von 100 Teilchen, die zufällig ausgewählt sind aus Teilchen, die sich innerhalb eines sichtbaren Feldes befinden, das durch ein Rasterelektronenmikroskop 200000-fach vergrößert ist.

10. Mit einem Fotokatalysator beschichteter Körper nach einem der Ansprüche 1 bis 9, wobei der mit einem Fotokatalysator beschichtete Körper als ein Außenmaterial verwendet wird.

11. Verwendung einer fotokatalytischen Beschichtungsflüssigkeit zum Herstellen des mit einem Fotokatalysator beschichteten Körpers nach einem der Ansprüche 1 bis 10, wobei die fotokatalytische Beschichtungsflüssigkeit enthält:

    ein Lösungsmittel,

Fotokatalysatorteilchen in dem Bereich zwischen mehr als 3 Massenprozent und weniger als 5 Massenprozent, wobei die Fotokatalysatorteilchen Titanoxidteilchen sind,

anorganische Oxidteilchen in dem Bereich zwischen mehr als 85 Massenprozent und weniger als 97 Massenprozent, wobei die anorganischen Oxidteilchen Siliciumdioxidteilchen sind, und

ein Bindemittel in dem Bereich zwischen 0 Massenprozent oder mehr und weniger als 10 Massenprozent, bezogen auf 100 Massenprozent der Gesamtheit von getrockneten Substanzen in der fotokatalytischen Beschichtungsflüssigkeit.

**12.** Verwendung nach Anspruch 11, wobei die Fotokatalysatorteilchen in dem Bereich zwischen 3,1 Massenprozent oder mehr und 4,9 Massenprozent oder weniger enthalten sind und die anorganischen Oxidteilchen in dem Bereich zwischen 85,1 Massenprozent oder mehr und 96,9 Massenprozent oder weniger enthalten sind, bezogen auf 100 Massenprozent der Gesamtheit von getrockneten Substanzen in der fotokatalytischen Beschichtungsflüssigkeit.

**13.** Verwendung nach Anspruch 11 oder 12, wobei die fotokatalytische Beschichtungsflüssigkeit durch Aufbringen auf ein Substrat verwendet wird, wobei eine Oberfläche des Substrats ein Harz umfasst, das eine organische Substanz enthält.

**14.** Verwendung nach Anspruch 13, wobei die fotokatalytische Beschichtungsflüssigkeit durch Aufbringen auf ein Substrat verwendet wird, wobei das Harz, das die organische Substanz enthält, ein gegenüber dem Fotokatalysator korrosionsresistentes Harz ist.

**15.** Verwendung nach Anspruch 14, wobei eine Schicht, die das gegenüber dem Fotokatalysator korrosionsresistente Harz enthält, auf der Oberfläche des Substrats gebildet ist.

**16.** Verwendung nach einem der Ansprüche 11 bis 15, wobei die fotokatalytische Beschichtungsflüssigkeit zum Bilden eines mit einem Fotokatalysator beschichteten Körpers verwendet wird, der eine Fotokatalysatorschicht aufweist, die durch Aufbringen auf ein Substrat erhalten wird, wobei der Kontaktwinkel von Wasser zu der Oberfläche der Fotokatalysatorschicht nach einer Exponierung im Freien während 8 Tagen unter der Bedingung, dass gelegentlicher Regen darauf fällt, geringer als 20° ist.

**17.** Verwendung nach einem der Ansprüche 11 bis 16, wobei das Bindemittel wenigstens eines ist, ausgewählt aus der Gruppe bestehend aus einem hydrolysierbaren Silicon, einer Vorstufe für das amorphe anorganische Oxid, einem Harzbindemittel, und einem Alkalisilikat.

**18.** Verwendung nach einem der Ansprüche 11 bis 17, wobei die Fotokatalysatorteilchen einen zahlengemittelten Teilchendurchmesser im Bereich von 10 nm oder mehr bis 100 nm oder weniger aufweisen, berechnet durch Messen der Länge von 100 Teilchen, die zufällig ausgewählt sind aus Teilchen, die sich innerhalb eines sichtbaren Feldes befinden, das durch ein Rasterelektronenmikroskop 200000-fach vergrößert ist.

**19.** Verwendung nach einem der Ansprüche 11 bis 18, wobei die anorganischen Oxidteilchen einen zahlengemittelten Teilchendurchmesser im Bereich von mehr als 5 nm bis 100 nm oder weniger aufweisen, berechnet durch Messen der Länge von 100 Teilchen, die zufällig ausgewählt sind aus Teilchen, die sich innerhalb eines sichtbaren Feldes befinden, das durch ein Rasterelektronenmikroskop 200000-fach vergrößert ist.

**Revendications**

**1.** Corps revêtu d'un photocatalyseur comprenant un substrat et une couche de photocatalyseur formée sur le substrat, la couche de photocatalyseur comprenant :

des particules de photocatalyseur dans une plage supérieure à 3 % en masse et inférieure à 5 % en masse, dans lequel les particules de photocatalyseur sont des particules d'oxyde de titane, des particules d'oxyde inorganique dans une plage supérieure à 85 % en masse et inférieure à 97 % en masse, dans lequel les particules d'oxyde inorganique sont des particules de silice, et un liant dans une plage supérieure ou égale à 0 % en masse et inférieure à 10 % en masse, par rapport à la totalité de la couche de photocatalyseur, soit 100 % en masse.

**2.** Corps revêtu d'un photocatalyseur selon la revendication 1, dans lequel la couche de photocatalyseur comprend les particules de photocatalyseur dans une plage supérieure ou égale à 3,1 % en masse et inférieure ou égale à 4,9 % en masse, et des particules d'oxyde inorganique dans une plage supérieure ou égale à 85,1 % en masse et inférieure ou égale à 96,9 % en masse, par rapport à la totalité de la couche de photocatalyseur, soit 100 % en masse.

3. Corps revêtu d'un photocatalyseur selon la revendication 1 ou 2, dans lequel le substrat comprend une résine contenant sur sa surface une substance organique, et la couche de photocatalyseur est pourvue sur la surface.

4. Corps revêtu d'un photocatalyseur selon la revendication 3, dans lequel une surface du substrat comprend une résine contenant une substance organique, et la couche de photocatalyseur est pourvue sur la surface.

5. Corps revêtu d'un photocatalyseur selon la revendication 4, dans lequel une couche contenant la résine anticorrosive à photocatalyseur est formée sur le substrat.

6. Corps revêtu d'un photocatalyseur selon l'une quelconque des revendications 1 à 5, dans lequel l'angle de contact de l'eau avec la surface de la couche de photocatalyseur est inférieur à 20 degrés après une exposition à l'extérieur de 8 jours dans des conditions où il est soumis à une chute de pluie occasionnelle.

7. Corps revêtu d'un photocatalyseur selon l'une quelconque des revendications 1 à 6, dans lequel le liant est au moins l'un sélectionné parmi le groupe consistant en une substance obtenue par séchage d'un silicone hydrolysable, un oxyde inorganique amorphe, un liant à résine et un silicate alcalin.

8. Corps revêtu d'un photocatalyseur selon l'une quelconque des revendications 1 à 7, dans lequel les particules de photocatalyseur présentent un diamètre de particule moyen compris dans une plage supérieure ou égale à 10 nm et inférieure ou égale à 100 nm, calculé en mesurant la longueur de 100 particules sélectionnées aléatoirement parmi des particules situées dans un champ visible agrandi 200.000 fois par un microscope électronique à balayage.

9. Corps revêtu d'un photocatalyseur selon l'une quelconque des revendications 1 à 8, dans lequel les particules d'oxyde inorganique présentent un diamètre de particule moyen compris dans une plage supérieure à 5 nm et inférieure ou égale à 100 nm, calculé en mesurant la longueur de 100 particules sélectionnées aléatoirement parmi des particules situées dans un champ visible agrandi 200.000 fois par un microscope électronique à balayage.

10. Corps revêtu d'un photocatalyseur selon l'une quelconque des revendications 1 à 9, dans lequel le corps revêtu d'un photocatalyseur est utilisé comme matériau extérieur.

11. Utilisation d'un liquide de revêtement photocatalytique pour préparer le corps revêtu d'un photocatalyseur selon l'une quelconque des revendications 1 à 10, le liquide de revêtement photocatalytique contenant :

un solvant,
des particules de photocatalyseur dans une plage supérieure à 3 % en masse et inférieure à 5 % en masse, dans laquelle les particules de photocatalyseur sont des particules d'oxyde de titane,
des particules d'oxyde inorganique dans une plage supérieure à 85 % en masse et inférieure à 97 % en masse, dans laquelle les particules d'oxyde inorganique sont des particules de silice, et
un liant dans une plage supérieure ou égale à 0 % en masse et inférieure à 10 % en masse,
par rapport à la totalité des substances séchées présentes dans le liquide de revêtement photocatalytique, soit 100 % en masse.

12. Utilisation selon la revendication 11, dans laquelle les particules de photocatalyseur sont contenues dans une plage supérieure ou égale à 3,1 % en masse et inférieure ou égale à 4,9 % en masse, et les particules d'oxyde inorganique sont contenues dans une plage supérieure ou égale à 85,1 % en masse et inférieure ou égale à 96,9 % en masse, par rapport à la totalité des substances séchées présentes dans le liquide de revêtement photocatalytique, soit 100 % en masse.

13. Utilisation selon la revendication 11 ou 12, le liquide de revêtement photocatalytique étant utilisé en l'appliquant sur un substrat, dans laquelle une surface du substrat comprend une résine contenant une substance organique.

14. Utilisation selon la revendication 13, le liquide de revêtement photocatalytique étant utilisé en l'appliquant sur un substrat, dans laquelle la résine contenant la substance organique est une résine anticorrosive à photocatalyseur.

**15.** Utilisation selon la revendication 14, dans laquelle une couche contenant la résine anticorrosive à photocatalyseur est formée sur la surface du substrat.

**16.** Utilisation selon l'une quelconque des revendications 11 à 15, le liquide de revêtement photocatalytique étant utilisé pour former un corps revêtu d'un photocatalyseur présentant une couche de photocatalyseur obtenue en l'appliquant sur un substrat, dans laquelle l'angle de contact de l'eau avec la surface de la couche de photocatalyseur est inférieur à 20 degrés après une exposition à l'extérieur de 8 jours dans des conditions où il est soumis à une chute de pluie occasionnelle.

**17.** Utilisation selon l'une quelconque des revendications 11 à 16, dans laquelle le liant est au moins l'un sélectionné parmi le groupe constitué par un silicone hydrolysable, un précurseur de l'oxyde inorganique amorphe, un liant à résine et un silicate alcalin.

**18.** Utilisation selon l'une quelconque des revendications 11 à 17, dans laquelle les particules de photocatalyseur présentent un diamètre de particule moyen compris dans une plage supérieure ou égale à 10 nm et inférieure ou égale à 100 nm, calculé en mesurant la longueur de 100 particules sélectionnées aléatoirement parmi des particules situées dans un champ visible agrandi 200.000 fois par un microscope électronique à balayage.

**19.** Utilisation selon l'une quelconque des revendications 11 à 18, dans laquelle les particules d'oxyde inorganique présentent un diamètre de particule moyen compris dans une plage supérieure à 5 nm et inférieure ou égale à 100 nm, calculé en mesurant la longueur de 100 particules sélectionnées aléatoirement parmi des particules situées dans un champ visible agrandi 200.000 fois par un microscope électronique à balayage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H111999169727 A
- WO 9700134 A
- JP 4092434 B
- WO 9803607 A
- JP A200451644 A
- WO 2010029596 A
- WO 2009129760 A
- US 20050233135 A
- US 20050266981 A

**Non-patent literature cited in the description**

- **MITSUNOBU KOBIYAMA.** Basic Principle of Optical Thin Film. The Optronics Co., Ltd, 2003, 1-70
- **MITSUNOBU KOBIYAMA.** Basic Principle of Optical Thin Film. The Optronics Co.,Ltd, 2003, 1-70
- **D. E. ASPNES.** *Thin Solid Films,* 1982, vol. 89, 249
- **E. D. PALIK.** Handbook of Optical Constants of Solids. Academic Press, 1998